# EUROPÄISCHE PATENTSCHRIFT

(11) **EP 0 863 824 B1**
(45) Veröffentlichungstag und Bekanntmachung des Hinweises auf die Patenterteilung: **13.10.1999**
(21) Anmeldenummer: 96924772.5
(22) Anmeldetag: 25.07.1996
(51) Int. Cl.: B60T 8/94, B60T 8/48, B60T 8/24

(54) **HYDRAULISCHE BREMSANLAGE FÜR KRAFTFAHRZEUGE**
HYDRAULIC BRAKING SYSTEM FOR MOTOR VEHICLES
SYSTEME DE FREINAGE HYDRAULIQUE POUR AUTOMOBILES

(30) Priorität: 14.12.1995 DE 19546682
(43) Veröffentlichungstag der Anmeldung: 16.09.1998
(73) Patentinhaber: ROBERT BOSCH GMBH, 70442 Stuttgart (DE)
(72) Erfinder: SIEGEL, Heinz, D-70435 Stuttgart (DE); PAHL, Arnold, D-71706 Markgröningen (DE); HUMMEL, Rolf, D-71144 Steinenbronn (DE); KRENZ, Günter, D-71711 Steinheim (DE); MANK, Erika, D-71634 Ludwigsburg (DE); STOTZ, Rolf, D-71665 Vaihingen (DE)
(86) Internationale Anmeldenummer: DE9601374
(87) Internationale Veröffentlichungsnummer: WO9721571

(56) Entgegenhaltungen:
- EP-A- 0 482 367
- DD-A- 112 160
- DE-A- 4 011 668
- US-A- 4 778 350
- PATENT ABSTRACTS OF JAPAN vol. 17, no. 623 (M-1511), 17.November 1993 & JP 05 193494 A (HITACHI), 3.August 1993,

## Beschreibung

### Stand der Technik

Die Erfindung geht aus von einer Bremsanlage nach der Gattung des Patentanspruchs 1.

Es ist schon eine solche Bremsanlage in der am 28.5.97 nachveröffentlichten DE 196 19 985 A1 vorgeschlagen worden, bei der die selbstansaugende Ladepumpe beispielsweise bei einer Antriebsschlupfregelung die Hochdruckpumpe aus dem Bremsflüssigkeits-Vorratsbehälter eines Hauptbremszylinders mit Bremsflüssigkeit versorgt, damit letztere beschleunigt Bremsdruck zur Einsteuerung in die Radbremse erzeugen kann.

Ferner ist aus EP 0 482 367 A1 eine hydraulische Bremsanlage der gattungsgemäßen Art bekannt, welche eine Ladepumpe hat, mit der bei einer Antriebsschlupfregelung Bremsflüssigkeit aus einem Vorratsbehälter eines Hauptbremszylinders sowohl zu der Saugseite einer Hochdruckpumpe als auch direkt in eine Bremsleitung, an welche Radbremsen angeschlossen sind, förderbar ist. Bei einer solchen Bremsanlage muß sichergestellt sein, daß auf dem Wege über die Ladepumpe keine Luft in das System gelangt. Dies kann durch unzureichende Füllung des Bremsflüssigkeits-Vorratsbehälters oder eine durchtrennte, nicht montierte oder gelöste Saugleitung geschehen.

Aus DE 40 11 668 A1 ist es daher bekannt, bei einer selbstansaugenden Hydropumpe bei fehlender Saugleitung eine Kurzschlußverbindung zwischen dem Saugraum und dem Druckraum der Pumpe freizugeben. Die Pumpe vermag in diesem fehlerhaften Zustand keinen Druck aufzubauen, so daß keine Luft in das System gefördert werden kann.

### Vorteile der Erfindung

Die erfindungsgemäße Bremsanlage mit dem kennzeichnenden Merkmal des Patentanspruchs 1 hat demgegenüber den Vorteil, daß im Fehlerfall eine Förderung von Luft durch die Ladepumpe in das System auch bei ordnungsgemäß an die Ladepumpe angeschlossener Saugleitung vermieden wird. Sobald nämlich der Flüssigkeitsspiegel in der Saugleitung den Siphon erreicht, wird von der Ladepumpe eine solch große Luftmenge angesaugt, daß diese jede weitere Förderung schlagartig einstellt.

Durch die in den Unteransprüchen aufgeführten Maßnahmen sind vorteilhafte Weiterbildungen und Verbesserungen der im Patentanspruch 1 angegebenen Bremsanlage möglich.

So kann die im Anspruch 2 gekennzeichnete vorteilhafte Maßnahme auf einfache Weise durch entsprechende Verlegung der Saugleitung oder durch einen erfindungsgemäß geformten Schlauch oder ein gebogenes Rohr erzielt werden.

Dem Anspruch 3 offenbarte vorteilhafte Ausgestaltung der Erfindung befreit darüber hinaus von den vorgenannten Montageerfordernissen für die Saugleitung, weil der Siphon vollständig unmittelbar an der Pumpe in deren Gehäuse ausgebildet ist.

### Zeichnungen

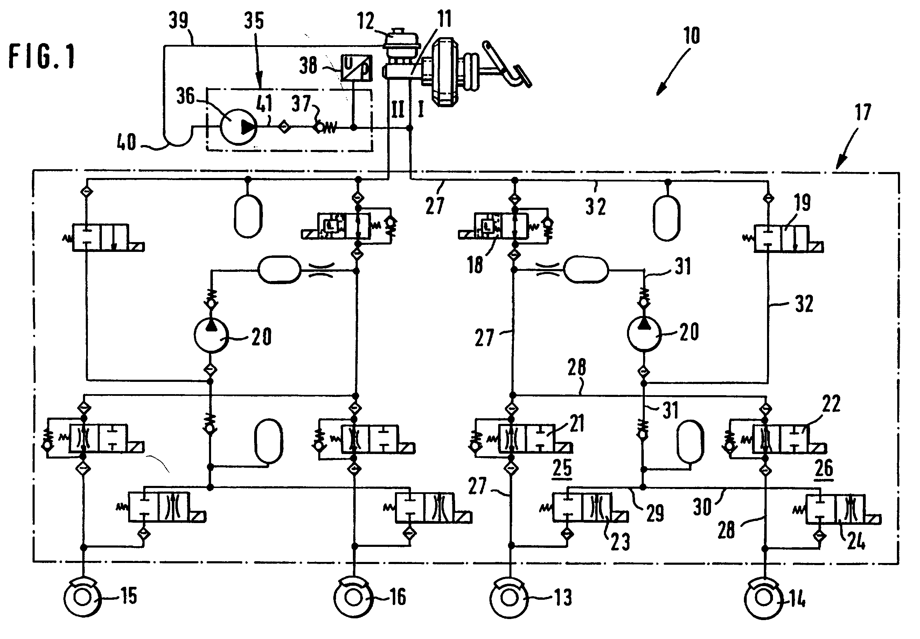

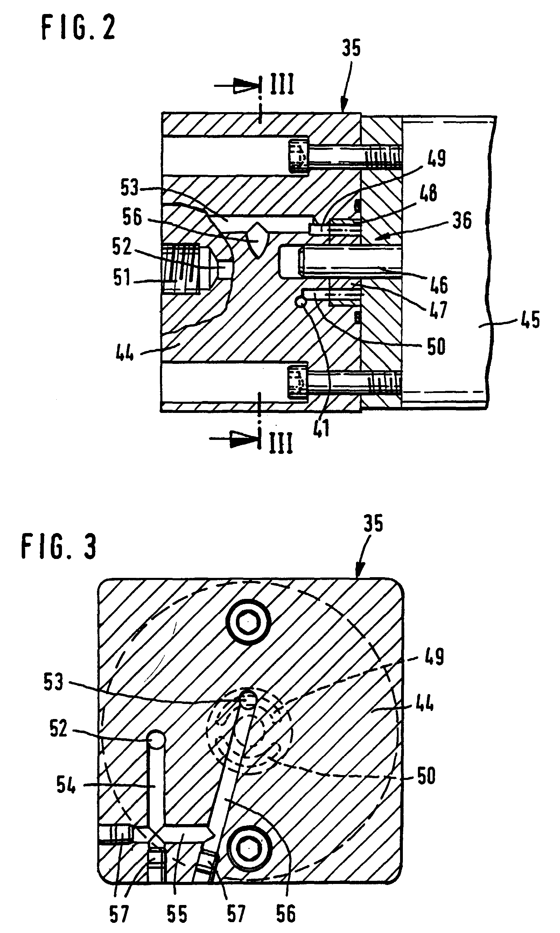

Zwei Ausführungsbeispiele der Erfindung sind in den Zeichnungen vereinfacht dargestellt und in der nachfolgenden Beschreibung näher erläutert. Es zeigen Figur 1 ein Schaltschema der Bremsanlage mit einem Siphon in der Saugleitung einer Ladepumpe als erstes Ausführungsbeispiel, Figur 2 einen Längsschnitt durch eine Ladepumpe mit in deren Gehäuse ausgebildetem Siphon als zweites Ausführungsbeispiel und Figur 3 einen Schnitt durch das Gehäuse der Ladepumpe entlang der Linie III-III in Figur 2.

### Beschreibung der Ausführungsbeispiele

Eine in Figur 1 schematisch dargestellte hydraulische Bremsanlage 10 für Kraftfahrzeuge hat einen zweikreisigen, pedalbetätigbaren Hauptbremszylinder 11 mit einem Vorratsbehälter 12 für Bremsflüssigkeit. An den Hauptbremszylinder 11 ist ein den Radbremsen 13, 14 einer Vorderachse des Fahrzeugs zugeordneter erster Bremskreis I angeschlossen; ein zweiter Bremskreis II des Hauptbremszylinders 11 steht mit Radbremsen 15, 16 der Hinterachse des Fahrzeugs in Verbindung. Elemente der Bremsanlage 10, welche gemäß dem in Figur 1 dargestellten Schaltschema zwischen dem Hauptbremszylinder 11 und den Radbremsen 13 bis 16 in den Bremskreisen I und II angeordnet sind, sind in einem Hydroaggregat 17 vereinigt.

Wie nachstehend anhand des Bremskreises I beschrieben ist, gehören zu diesen Elementen ein Absperrventil 18 mit Druckbegrenzungsfunktion, ein Ladeventil 19, eine Hochdruckpumpe 20 sowie Druckaufbauventile 21, 22 und Druckabbauventile 23, 24 von den Radbremsen 13 und 14 zugeordneten Druckmodulationsvorrichtungen 25 und 26. Während sich das Absperrventil 18 und die Druckaufbauventile 21 und 22 in vom Hauptbremszylinder 11 zu den Radbremsen 13 und 14 führenden Bremsleitungen 27 und 28 befinden, sind die Druckabbauventile 23 und 24 in Leitungszweigen 29 und 30 einer Rückförderleitung 31 angeordnet, in welcher die Hochdruckpumpe 20 vorgesehen ist. Die Leitungszweige 29 und 30 gehen zwischen den Druckaufbauventilen 21 und 22 und den Radbremsen 13 und 14 von den Bremsleitungen 27 und 28 aus, dagegen ist die Rückförderleitung 31 ausgangsseitig der Hochdruckpumpe 20 zwischen dem Absperrventil 18 und den beiden Druckaufbauventilen 21 und 22 an die Bremsleitung 27 angeschlossen. Das Ladeventil 19 befindet sich in einer Ladeleitung 32, die zwischen dem Hauptbremszylinder 11 und dem Absperrventil 18 von der Bremsleitung 27 ausgeht und saugseitig der Hochdruckpumpe 20 in die Rückförderleitung 31 einmündet. In entsprechender Weise ist der Bremskreis II ausgestattet.

Zur Bremsanlage 10 gehört außerdem eine Ladeeinheit 35, bestehend aus einer Ladepumpe 36, einem Rückschlagventil 37 und einem Drucksensor 38. Die Ladepumpe 36 ist mit einer Saugleitung 39 an den Bremsflüssigkeits-Vorratsbehälter 12 des Hauptbremszylinders 11 angeschlossen. Die Saugleitung 39 ist als bremsflüssigkeitsfester Schlauch oder als Rohr ausgebildet. In der Saugleitung 39 befindet sich eingangsseitig der Ladepumpe 36 ein Siphon 40. Dieser ist, wie im ersten Ausführungsbeispiel in Figur 1 dargestellt, außerhalb der Ladeeinheit 35 in der Saugleitung 39 ausgebildet. Von der Ladepumpe 36 geht eine Druckleitung 41 aus, welche zwischen dem Hauptbremszylinder 11 und dem Absperrventil 18 des Bremskreises I an die Bremsleitung 27 angeschlossen ist. In der Druckleitung 41 befindet sich das Rückschlagventil 37. Außerdem ist der Drucksensor 38 an die Druckleitung 41 angeschlossen.

Zur Bremsanlage 10 gehören ferner noch folgende, nicht dargestellte Elemente:
Ein elektronisches Steuergerät, dem das Raddrehverhalten der Fahrzeugräder überwachende Raddrehungssensoren zugeordnet sind, wenn die Bremsanlage für Blockierschutz- und Antriebsschlupfregelung ausgebildet ist. Soll die Bremsanlage 10 für automatisches Bremsen zum Zwecke der Fahrzeugstabilisierung bei Kurvenfahrt ausgerüstet sein, so gehören weitere Sensoren, wie Lenkradwinkelsensor, Giergeschwindigkeitssensor und Querbeschleunigungssensor zur Ausstattung der Bremsanlage 10.

Die Funktionsweise einer derartigen Bremsanlage 10 ist in der eingangs erwähnten DE 196 19 985 A1 beschrieben.

Die den beiden Bremskreisen I und II zugeordneten Hochdruckpumpen 20 sowie die Ladepumpe 36 sind elektromotorisch antreibbar. Die Hochdruckpumpen 20 sind Hubkolbenpumpen; die Ladepumpe 36 ist dagegen eine selbstansaugende Umlauf-Verdrängerpumpe, beispielsweise eine unter dem Handelsnamen "GEROTOR" bekannte Zahnringpumpe. Während die Ladepumpe 36 relativ geringe Drücke zu erzeugen vermag, sind die Hochdruckpumpen 20 zur Bereitstellung von Drücken bis zu zirka 200 bar ausgelegt. Die Ladepumpe 36 hat den Zweck, bei einer Antriebsschlupfregelung sowie beim automatischen Bremsen die Hochdruckpumpen 20 beschleunigt mit Bremsflüssigkeit zu versorgen, um die Ansprechzeit der Bremsanlage 10 zu verkürzen, insbesondere wenn bei tiefen Außentemperaturen die Bremsflüssigkeit eine höhere Viskosität hat als bei betriebswarmem Fahrzeug. Hierzu saugt die Ladepumpe 36 Bremsflüssigkeit aus dem Vorratsbehälter 12 an und fördert diese in den vom Stangenkolben des Hauptbremszylinders 11 betätigbaren Bremskreis I. Innere Widerstände des Hauptbremszylinders 11 verhindern, daß sich der Ladedruck der Ladepumpe 36 zum Vorratsbehälter 12 hin abbaut, sondern durch Verschieben von Bremsflüssigkeit durch die Ladeleitung 32 zur Saugseite der Hochdruckpumpe 20 wirksam wird. Durch den zwischen den Bremskreisen I und II im Hauptbremszylinder 11 befindlichen Trennkolben entfaltet der Ladedruck ebenfalls im Bremskreis II Wirkung und versorgt die dort befindliche Hochdruckpumpe 20 gleichfalls beschleunigt mit Bremsflüssigkeit.

Durch unzureichende Wartung der Bremsanlage 10, das heißt durch einen Bremsflüssigkeitsmangel im Vorratsbehälter 12 oder durch Mängel an der Saugleitung 39 besteht die Gefahr, daß während der vorbeschriebenen Funktionsweise Luft in den Bremskreis I gelangt. Es hat sich nun gezeigt, daß dies erfindungsgemäß durch die Anordnung des Siphons 40 in der Saugleitung 39 vermieden wird. Erreicht nämlich der Bremsflüssigkeitsspiegel in der Saugleitung 39 das Knie des Siphons 40, so saugt die Ladepumpe 36 eine solch große Luftmenge an, daß diese schlagartig die weitere Förderung der Ladepumpe 36 unterbricht. Luft kann daher die Bremsleitung 27 des Bremskreises I nicht erreichen.

Beim in den Figuren 2 und 3 dargestellten zweiten Ausführungsbeispiel ist die Erfindung innerhalb der Ladeeinheit 35 verwirklicht. Diese hat ein Gehäuse 44 mit angeflanschtem Antriebsmotor 45 der Ladepumpe 36. Eine in das Gehäuse 44 eingreifende Motorwelle 46 trägt ein außen verzahntes Zahnrad 47, welches mit einem innen verzahnten Zahnring 48 kämmt. Der Ladepumpe 36 sind zwei nierenförmige Ausnehmungen 49 und 50 im Gehäuse 44 zugeordnet, von denen die eine Ausnehmung 49 saugseitig und die andere Ausnehmung 50 druckseitig der Pumpe angeordnet ist. Außerdem ist das Gehäuse 44 mit einem Anschlußstutzen 51 für den außerhalb der Ladeeinheit 35 verlaufenden Teil der Saugleitung 39 versehen. Vom Anschlußstutzen 51 geht eine parallelachsig zur Motorwelle 46 verlaufende Sacklochbohrung 52 aus. Ebenfalls parallel zur Motorwelle 46 verlaufend ist eine Bohrung 53 vorgesehen, welche in die saugseitige Ausnehmung 49 der Ladepumpe 36 mündet. Des weiteren sind drei Bohrungen 54, 55 und 56 vorgesehen, welche, wie Figur 3 deutlich zeigt, etwa U-förmig zueinander verlaufen und sich gegenseitig sowie die beiden erstgenannten Bohrungen 52 und 53 miteinander verbinden. Nach außen sind die Bohrungen 53, 54, 55 und 56 durch Verschlußelemente 57 dicht verschlossen.

In der Gebrauchslage der Ladeeinheit 35 bilden die Bohrungen 54, 55 und 56 den im Verlauf der Saugleitung 39 zwischen dem Bremsflüssigkeits-Vorratsbehälter 12 und der Ladepumpe 36 befindlichen Siphon 40.

Die Druckleitung 41 ist an die druckseitige Ausnehmung 50 angeschlossen. Auf eine Darstellung des weiteren Verlaufs der Druckleitung 41 im Gehäuse 44 der Ladepumpe 36 ist aus Gründen der Übersichtlichkeit der Zeichnung verzichtet.

## Patentansprüche

1. Hydraulische Bremsanlage (10) für Kraftfahrzeuge mit wenigstens einem Bremskreis (I), in dem eine Hochdruckpumpe (20) angeordnet ist, sowie mit einer selbstansaugenden Ladepumpe (36), welche sich in der Gebrauchslage unterhalb eines Vorratsbehälters (12) für Bremsflüssigkeit befindet und mit einer Saugleitung (39) an dem Vorratsbehälter (12) für Bremsflüssigkeit und mit einer Druckleitung (41) wenigstens mittelbar an die Saugseite der Hochdruckpumpe (20) angeschlossen ist, dadurch gekennzeichnet, daß in der Saugleitung (39) der Ladepumpe (36) ein Siphon (40) angeordnet ist.

2. Bremsanlage nach Anspruch 1, dadurch gekennzeichnet, daß der Siphon (40) in einer als Schlauch oder Rohr ausgebildeten Saugleitung (39) vorgesehen ist.

3. Bremsanlage nach Anspruch 1, dadurch gekennzeichnet, daß der Siphon (40) mittels Bohrungen (54, 55, 56) im Gehäuse (44) der Ladepumpe (36) ausgebildet ist.

## Claims

1. Hydraulic brake system (10) for motor vehicles having at least one brake circuit (I) in which a high-pressure pump (20) is arranged, and having a self-priming charge pump (36) which, in the position of use, is located beneath a reservoir vessel (12) for brake fluid and is connected to the reservoir vessel (12) for brake fluid by a suction line (39) and at least indirectly to the suction side of the high-pressure pump (20) by a pressure line (41), characterized in that a siphon (40) is arranged in the suction line (39) of the charge pump (36).

2. Brake system according to Claim 1, characterized in that the siphon (40) is provided in a suction line (39) which is designed as a hose or a pipe.

3. Brake system according to Claim 1, characterized in that the siphon (40) is formed in the housing (44) of the charge pump (36) by means of holes (54,55,56).

## Revendications

1. Système hydraulique de freinage (10) pour véhicules à moteur, qui comprend au moins un circuit de freinage (I) dans lequel est disposée une pompe haute pression (20), ainsi qu'une pompe de suralimentation autoaspirante (36) qui se trouve en position d'utilisation en dessous d'un réservoir (12) pour liquide de frein et qui est raccordée, par une conduite d'aspiration (39) sur le réservoir (12) pour liquide de frein, et par une conduite sous pression (41) au moins au côté aspiration de la pompe haute pression (20),
caractérisé par
un siphon (40) monté dans la conduite d'aspiration (39) de la pompe de suralimentation (36).

2. Système de freinage selon la revendication 1,
caractérisé en ce que
le siphon (40) est prévu dans une conduite d'aspiration (39) constituée sous la forme d'un tuyau ou d'un tube.

3. Système de freinage selon la revendication 1,
caractérisé en ce que
le siphon (40) est constitué au moyen d'alésages (54, 55, 56) dans le boîtier (44) de la pompe de suralimentation (36).
